(19) Europäisches Patentamt
European Patent Office
Office européen des brevets

(11) **EP 3 090 972 B1**

(12) **EUROPÄISCHE PATENTSCHRIFT**

(45) Veröffentlichungstag und Bekanntmachung des Hinweises auf die Patenterteilung:
**03.01.2018 Patentblatt 2018/01**

(51) Int Cl.:
***B65H 1/06*** *(2006.01)*   ***B65H 5/06*** *(2006.01)*
***B65H 3/06*** *(2006.01)*   ***B65H 27/00*** *(2006.01)*
***B65G 39/02*** *(2006.01)*

(21) Anmeldenummer: **16168036.8**

(22) Anmeldetag: **03.05.2016**

(54) **TRANSPORTMODUL FÜR FLACHE GÜTER**

TRANSPORT MODULE FOR FLAT ITEMS

MODULE DE TRANSPORT POUR PRODUITS PLATS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2015 DE 202015102333 U**
**12.04.2016 DE 202016101920 U**

(43) Veröffentlichungstag der Anmeldung:
**09.11.2016 Patentblatt 2016/45**

(73) Patentinhaber: **Francotyp-Postalia GmbH**
**13089 Berlin (DE)**

(72) Erfinder: **Muhl, Wolfgang**
**16540 Hohen Neuendorf (DE)**

(56) Entgegenhaltungen:
**WO-A1-2014/066838     US-A- 4 399 675**
**US-A- 4 973 037     US-A1- 2003 150 079**

**Beschreibung**

Die Erfindung betrifft ein Transportmodul für flache Güter gemäß dem Oberbegriff des Patentanspruchs 1. Solche Transportmodule können vorteilhaft zum Beispiel in Gutverarbeitungssystemen, insbesondere in einer ersten Station am Anfang einer Poststraße eingesetzt werden. Eine Poststraße eines Frankiersystems besteht aus einzelnen aneinandergereihten Postverarbeitungsstationen und die flachen Güter sind Poststücke. Am Anfang der Poststraße kann eine Anlegestation als erste oder n-te Station aufgestellt werden. Die Anlegestation dient zum Anlegen von einzelnen oder gestapelten Poststücken, welche poststromabwärts durch weitere Stationen bis zum Ende der Poststraße zu einer Ablagevorrichtung transportiert werden. Ein Stapel kann Poststücke von unterschiedlichem Format (Mischpost) enthalten.

Unter Mischpost sollen auch formatähnliche Poststücke verstanden werden, die in der Höhe und Breite in engen Grenzen differieren, wie beispielsweise die Briefkuverts der Formate B6 (12.5 x 17.6 cm) und C6 (11.4 x 16.2 cm). Die öfter verwendeten Briefkuverts in den Formaten C6, C6lang C5, B4 und Postkarten haben unterschiedliche Breiten und Längen. Die Briefkuverts gibt es in verschiedenen Standardgrößen, definiert in ISO 269 und DIN 678 weitgehend anhand bestehender Papierformate. Die Briefkategorien der Deutschen Post AG unterscheiden sich im Gewichtsbereich und in den Briefdimensionen. Sie umfassen die Postkarte (bis 150g) im DIN-Format A6, den Standardbrief (bis 20g) und den Kompaktbrief (bis 50g) in passenden DIN-Formaten C6, B6, C5/6 (DL), C6/5 sowie den Großbrief (bis 500g) und Maxibrief (bis 1000g) in passenden DIN-Formaten C6, B6, C5/6 (DL), C6/5, C5, B5, C4, B4.

Wenn nachfolgend von einem Stapel gesprochen wird, sind Briefstapel, Postkarten-stapel, Poststückstapel oder andere gestapelte Waren bzw. gestapeltes flache Güter gemeint, die sich vereinzeln lassen und auf der Seite liegend zugeführt werden.

In dem deutschen Gebrauchsmuster DE 20 2011 107 379 U1 wurde bereits eine modulare Anlegevorrichtung für eine Zuführstation vorgeschlagen. Die Anlegevorrichtung ist als rein manuell bedienbares Modul ohne eigene Antriebstechnik ausgebildet. Die Poststücke werden auf eine aufstellbare Rampe gelegt und durch Schwerkraftwirkung in Transportrichtung bewegt. Eine Mischpostverarbeitung ist aber nicht vorgesehen.

Aus der internationalen Patentanmeldung WO2014066838 A1 ist bereits eine Drehförderfläche mit einer variablen Ausgangsrichtung bekannt, während die Eingangsrichtung konstant beibehalten wird. Die Drehförderfläche kann zum Transport eines Förderguts in mehr als eine Richtung verwendet werden. Die Antriebsenergie kann von mindestens einer linearen Antriebsquelle, welche eine Antriebsleistung eine erste Richtung abgibt, zu der Drehförderfläche übertragen werden, die eine Vielzahl von Antriebsmitteln aufweist, wobei die Antriebsenergie zu den ausgangsseitigen Antriebsmitteln übertragbar ist. Jedes Antriebsmittel hat einen Eingangsantrieb, der um eine Eingangsachse drehbar ist und so konfiguriert ist, dass er eine lineare Leistung von der mindestens einen Quelle empfängt, wobei die Eingangsachse im Allgemeinen senkrecht zur ersten Richtung steht. Jedes Antriebsmittel weist einen Ausgangsantrieb auf, der um eine Ausgangsachse drehbar ist und betriebsmäßig mit dem Eingangsantrieb verbunden ist, wobei der Ausgangsantrieb eine Orientierung aufweist, die variiert werden kann, und einen Antriebsstrang, wobei der Antriebsstrang ein erstes, zweites und drittes Element aufweist. Das erste Element ist ein Kegelrad, das um eine erste Achse drehbar angetrieben ist, wobei die erste Achse im Wesentlichen senkrecht zur Förderfläche steht. Das zweite Element ist um eine zweite Achse drehbar, wobei die zweite Achse senkrecht zur ersten Achse steht, wobei der Eingangsantrieb das erste Element durch das zweite Element betreibbar antreibt. Das dritte Element, ist um eine dritte Achse drehbar, wobei die dritte Achse senkrecht zur ersten Achse ist, wobei der Eingangsantrieb das dritte Element durch das erste Element und das zweite Element betreibbar antreibt. Der Antrieb durch ein Förderband als lineare Antriebsquelle hat den Nachteil, dass partiell ein Teil der Antriebsmittel der Drehförderfläche nicht voll angetrieben werden kann, weil das eingangsseitige Antriebselement einen Schlupf gegenüber dem Förderband aufweist. Dadurch ist die Ausrichtfunktion der Drehförderfläche für das Fördergut fehlerhaft.

Es sind bereits Mittel zum Transportieren der Poststücke sowohl stromabwärts, als auch in Richtung auf die Ausrichtungswand sowie zum Auflockern der Poststücke (offene oder verschlossene gefüllte Briefumschläge) eines Stapels vorgesehen, damit sie leichter übereinander gleiten können. Außerdem wurde ein Mehrfachschrägstellen der Poststapelplatte im Stapelmagazinbereich vorgeschlagen, um die Schwerkraft für die Ausrichtung der Poststücke zu nutzen. Durch ein Mehrfachschrägstellen der Poststapelplatte im Stapelmagazinbereich, kann der Briefumschlag beim Übergang in den Zuführbereich mit horizontaler Lage gegebenenfalls einklemmen, insbesondere bei geöffneter Umschlagslasche. Durch den kleinen Winkelbereich ist eine Ausrichtung der Poststücke an der Ausrichtwand nur in einem beschränkten Maße möglich.

Die aus dem Patent US 4,973,037 bekannten Transportmittel einer Zuführstation sind exzentrisch gestaltete Auflockerungsrollen mit unterschiedlichen Reibungskoeffizienten, die während einer Umdrehung der Auflockerungsrolle abwechselnd über einem Anlegedeck auf- und abtauchen, so dass ein unterstes flaches Gut eines Stapels von flachen Gütern intermittierend kontaktiert wird. Die Reibung an den Rollen, während die flachen Güter intermittierend kontaktiert werden und die benötigte Kraft zur Stapelanhebung ist bei hohen und schweren Stapeln sehr groß. Bei einem sehr hohen Traktion (Reibwert) kann ein unterstes flaches Gut an einer Ausrichtwand der Anlegestation anschlagen und zerknittern bzw. beschädigt werden. Eine Vielzahl an Rollengruppen von Auflockerungsrollen wird durch einen ersten Motor angetrieben, der die benötigte Kraft aufbringen muss. Die Vielzahl an Rollengruppen von Auflockerungsrollen sind in einem Gestell angeordnet, das mittels eines zweiten Motors und einer Steuerscheibe periodisch in einem kleinen Winkelbereich hin- und her bewegt werden kann. Die Verwendung solcher Auflockerungsrollen mit periodisch auf einen Stapel einwirkender Kraft verursacht aber einen unruhigen Lauf mit erhöhtem Lärmpegel, Durch Einkoppeln von Störschwingungen wird auch eine dynamische Gewichtsmessung in einem Frankiersystem erheblich gestört. Trotz der Bewegung von Rollengruppen in einem Winkelbereich ist eine beliebige Lageausrichtung der Rollengruppen nicht möglich. Ein weiterer Nachteil der Rollen besteht darin, dass sich die Poststücke nicht quer zu der Laufrichtung verschieben lassen, solange die Rollen noch über das Anlegedeck hinausragen, also bevor sie unter das Anlegedeck abtauchen.

Bekanntlich steigt mit einem höheren Durchsatz (z.B. höherer Stapel) an flachen Gütern auch die Fehlerrate beim Anlegen der gleichpostartigen Poststücke an eine Ausrichtwand der Anlegestation. Deshalb besteht ein Interesse daran, die Fehlerrate zu verringern und die Vereinzelungssicherheit für eine nachfolgend im Poststrom angeordnete Vereinzelungsvorrichtung zu erhöhen.

Es ist Aufgabe, ein Transportmodul für ein flaches Gut zu schaffen, welche die oben genannten Nachteile nicht aufweist. Das Transportmodul für ein flaches Gut soll insbesondere zum Anlegen gleichpostartiger Poststücke an eine Ausrichtwand einer Anlegestation entwickelt werden, und so ausgebildet sein, dass auch eine Vielzahl an Transportmodulen in eine Anlegevorrichtung bzw. in die Anlegestation leicht montierbar ist und jedes Transportmodul einzeln auswechselbar ist. Ein manuell an der Ausrichtwand korrekt angelegter Stapel von flachen Gegenständen mit unterschiedlichen Breiten und Längen bis zu 20mm Unterschied soll fehlerfrei verarbeitet werden, ohne dass sich die flachen Gegenstände bei der Verarbeitung des Stapels von der Ausrichtwand wegdrehen, bevor diese in eine Vereinzelungsvorrichtung einer Vereinzelungsstation eingezogen werden. Jedes Transportmodul soll deshalb in eine beliebige Ausrichtungsrichtung schwenkbar und in eine Transportrichtung der flachen Gegenstände drehbar sein und ein angetriebenes Transportelement für die flachen Gegenstände aufweisen, um die an der Ausrichtwand nicht anliegenden flachen Gegenstände auf dem Anlegedeck, automatisch an die Ausrichtwand heran zu schieben und/ oder in die Transportrichtung der flachen Gegenstände zu transportieren. Das angetriebene Transportelement des Transportmoduls soll einen Freilauf aufweisen. Jedes Transportelement soll in einer Ebene in eine beliebige Ausrichtungsrichtung gedreht antreibbar sein. Außerdem soll jedes Transportmodul soll eine Reibwertbegrenzung ermöglichen und die Getriebemittel einer Bewegungsmechanik aufnehmen, welche die Antriebsenergie eines einzigen Antriebsmotors einer Anlegestation auf das Transportelement jedes Transportmoduls möglichst verlustarm überträgt.

Die Aufgabe wird mit den Merkmalen des Transportmoduls nach dem Patentanspruchs 1 gelöst.

Es ist vorgesehen, dass jedes Transportmodul einer Vielzahl an Transportmodulen für eine Montage in einer Station eines Gutverarbeitungssystems ausgebildet und gleich aufgebaut ist. Ein Transportelementträger weist Federmittel auf und trägt mindestens ein Transportelement, das auf der einen Seite einen geringeren Reibwert aufweist, als auf der anderen Seite eines Äquators sowie von einer Antriebswelle über Getriebemittel des Transportmoduls angetrieben wird, wobei der Transportelementträger die Getriebemittel des Transportmoduls trägt und Federmittel aufweist. Ein jedes Transportmodul, das in einer Station eines Gutverarbeitungssystems angeordnet und um eine Achse der Antriebswelle drehbar gelagert ist, kann entgegen einer Federkraft F1 in Schwerkraftrichtung und dazu entgegengesetzt in z-Richtung verschoben werden. Das montierte Transportmodul ist um eine Achse der Antriebwelle drehbar gelagert.

Durch Versuche wurde herausgefunden, dass eine Vielzahl von Transportmodulen in einer vorbestimmten Anordnung erforderlich ist, die unter dem Anlegedeck montiert sind und mit ihrem Oberteil durch Öffnungen im Anlegedeck hindurch ragen. Das Oberteil enthält je ein angetriebenes Transportelemente in einer bestimmten balligen oder kugelartigen Form. Andererseits wurde empirisch ermittelt, dass die Transportelemente, die Nahe an der Ausrichtwand angeordnet sind, keine beliebig verstellbare Lageausrichtungsvorrichtung und nur eine feste eingestellte Ausrichtungsrichtung benötigen, wenn die flachen Güter quer zu der Ausrichtungsrichtung über die Transportelemente in Richtung der Ausrichtwand verschoben werden können, wobei nur eine Gleitreibung zwischen den Transportelementen und dem flachen Gut auftritt. Ebenfalls wurden die benötigten Winkel der Lageausrichtung für die übrigen Transportelemente empirisch ermittelt, die für einzelne Briefformatgrößen und deren Oberflächengüte sowie bei einer bestimmten Transportgeschwindigkeit erforderlich ist. Des Weiteren ist vorgesehen, die Transportmodule so auszubilden, dass jedes Transportelement unabhängig von den anderen Transportelementen in das Anlegedeck der Anlegestation abtauchen kann. Jedes Transportelement ist durch eine Feder entgegen der Schwerkraft mit einer Kraft F1 beaufschlagt. Wird nun ein Poststapel auf die Transportelemente aufgelegt, entsteht aufgrund der Schwerkraftwirkung auf seine Masse eine Gewichtskraft. Diese Kraft F2 wirkt in Schwerkraftrichtung entgegen der Kraft F1 einer Feder auf die Transportelemente. Damit passen sich die einzelnen Transportelemente optimal der Unterseite der Poststücke an, auch bei unebenen Poststücken. Nachdem die Kraft F2 die Federkraft F1 überschritten hat, wird die Kraft F2 anteilig auf die Oberfläche des Anlegedecks übertragen, wodurch die Traktionswirkung der Transportelemente begrenzt wird, weil die Transportelemente im Anlegedeck der Anlegestation nach unten wegtauchen können, solange bis das Poststück flächig auf das Anlegedeck aufliegt. Somit wird der vorgegebene maximale Reibwert der einzelnen Transportelemente, unabhängig der Kraft F2 ≥ F1 begrenzt. Bei einer geeigneten Materialpaarung bewegen sich die Reibflächen nicht relativ zueinander. Der maximale Reibwert der Transportelemente ist von der Materialpaarung abhängig, zum Beispiel bei Gummi auf Papier liegt $\mu_H$ im Bereich von 0,5 bis 1,3 und bei Kunststoff auf Papier liegt $\mu_H$ im Bereich von 0,1 bis 0,25.

Bei einem auf das Anlegedeck aufgelegten Stapel an flachen Gegenständen tritt bereits aufgrund des Stapelgewichts eine Haftreibung auf. Das Transportelement bringt für die Traktion eine Kraftkomponente $F_R$ in Transportrichtung auf, welche auch Reibungskraft genannt wird. Eine resultierende Kraft hat die Kraftkomponente $F_R$ in Transportrichtung und eine Kraftkomponente F2, die in Schwerkraftrichtung, also entgegen einer z-Richtung wirkt. Die Andruckkraft F2 kann durch ein zusätzliches Gewicht oder Federkraft und durch das Gewicht des Stapels gemeinsam gebildet werden. Sie ist in Schwerkraftrichtung gerichtet und wird auch Normalkraft genannt. Bei einem gegebenen Andruck durch die Kraft F2 kann in Transportrichtung oder in eine andere Ausrichtungsrichtung eine maximale Tangentialkraft übertragen werden, wobei für maximale Haftreibung die Gleichung gilt:

$$F_{R,max} = \mu_H \cdot F2$$

$$(1)$$

Dabei gilt:

$$\mu_H = \tan\left(\varphi\right)$$

$$(2)$$

Der Tangens des Reibungswinkels φ zwischen der oben genannten resultierenden Kraft und der Normalkraft F2 ergibt den Reibungskoeffizient $\mu_H$, der auch Reibwert genannt wird. Der Reibwert $\mu_H$ bestimmt, wie groß die Reibungskraft $F_R$ im Verhältnis zur Normalkraft F2 ist.

Es ist ein Transportelementträger in jedem Transportmodul vorgesehen, der zwei Seitenschenkel, ein Trägerjoch und eine Antriebswelle aufweist, wobei mindestens ein Transportelement in einem Trägerring montiert ist.

Der Trägerring geht in Schwerkraftrichtung in die zwei Seitenschenkel über, die an ihrem anderen Ende über das Trägerjoch miteinander verbunden sind, wobei die Seitenschenkel und das Trägerjoch rahmenförmig angeordnet sind.

Die Antriebswelle ragt in Schwerkraftrichtung aus einem montierten Transportelementträger in einer Länge hervor, die mindestens einer Summe aus einen ersten Abstand A und einer Höhe h entspricht, wobei der erste Abstand A für einen gemeinsamen Antrieb einer Vielzahl von Transportmodulen vorgesehen ist, und die Höhe h einer für die Traktion wirksamen Höhe H eines Kreissegments am Äquator eines Querschnitts des Transportelements entspricht.

Jedes Transportelement besteht aus einem um eine Drehachse drehbaren Formdrehkörper mit einem tonnenförmigen Gummimantel und wobei die Drehachse durch den Mittelpunkt eines Querschnitts einer ersten drehbaren geraden Welle verläuft, die in Lagern läuft, welche in den Seitenschenkeln des Trägers gelagert sind. Das Transportelement hat im Zentrum seinen größten Radius am Tonnenäquator. Der auf den Formdrehkörper aufgebrachte tonnenförmige Gummimantel ist unsymmetrisch zu seinem Tonnenäquator angeordnet, so daß die Oberfläche des Transportelements auf der einen Seite des Tonnenäquators in eine seitliche Lauffläche des Formdrehkörpers übergeht, welche einen geringeren Reibwert aufweist, als der Gummimantel, z.B. wenigstens einen 50%ig geringeren Reibwert.

Eine feststehende gerade Achse ist parallel der ersten drehbaren geraden Welle in einem zweiten Abstand B unterhalb der ersten drehbaren geraden Welle in Schwerkraftrichtung angeordnet und in einem dritten Abstand C von der Innenwand am Boden des Trägerjoch in den Seitenschenkeln des Trägers montiert.

Das Trägerjoch weist in seiner Mitte eine Lagerbohrung mit einem vorbestimmten Lagerdurchmesser für ein erstes und zweites radiales Gleitlager der Antriebswelle auf.

Die Antriebswelle hat einen Durchmesser D und ist drehbar in den ersten und zweiten radialen Gleitlagern montiert, wobei die Gleitlager eines unterhalb eines Anlegedecks einer Anlegestation montierten Transportmoduls zu einem Lagerloch einer Lagerplatte fluchtend so montiert ist, dass die Achse des Transportelementträgers durch den Mittelpunkt des Querschnitts der Antriebswelle und durch den Mittelpunkt des Lagerlochs verläuft.

Ein erstes Zahnrad ist auf der ersten drehbaren geraden Welle formschlüssig montiert und ein zweites Zahnrad ist auf der feststehenden geraden Lagerachse drehbar gelagert, wobei nach deren Montage im Transportelementträger, die Zähne der vorgenannten ersten und zweiten Zahnräder ineinander greifen.

Ein erstes Kegelzahnrad ist mit der Antriebswelle formschlüssig verbunden. Ein zweites Kegelzahnrad und das zweite Zahnrad sind auf der zweiten Lagerwelle gemeinsam montiert und formschlüssig und/oder stoffschlüssig miteinander verbunden, wobei die beiden Kegelzahnräder im Transportelementträger so zueinander ausgerichtet und montiert sind, dass beide ein Kegelradwälzgetriebe bilden.

Auf einer Lagerplatte kann eine Vielzahl an Transportmodulen einer Station eines Gutverarbeitungssystems montiert werden. Das am Träger montierte Federmittel ist zwischen dem Trägerjoch und der Lagerplatte mit einer Federkraft F1 wirksam, so das ein vierter Abstand E zwischen der Oberfläche des Anlegedecks und einer Oberfläche eines Halterings des Transportelements des montierten Transportmoduls minimal ist, wenn keine Andruckkraft F2 bzw. Gewichtskraft eines flachen Gutes auf das Transportelement einwirkt.

Die Lagerplatte ist zwischendeckartig und parallel im Abstand G zu dem Anlegedeck der Anlegestation vorgesehen, so dass innerhalb der Anlegestation ein Innenraum entsteht, in welchem alle Transportmodule auf der Lagerplatte montiert werden können.

Es ist vorgesehen, dass jedes Transportmodul eine Antriebswelle aufweist, die über Getriebemittel das Transportelement antreibt und dass die Antriebswelle durch die Lagerplatte hindurchragt, wobei die Ausrichtung der Antriebswelle mit der Ausrichtung der Drehachse des Transportmoduls übereinstimmt. Die Transportmodule sind entgegen der Federkraft F1 des Federmittels in Schwerkraftrichtung verschiebbar auf der Lagerplatte angeordnet. Das Federmittel ist vorzugsweise eine Zugfeder, die bei einer Montage auf der Lagerplatte einer Station eines Gutverarbeitungssystems vorgespannt ist.

Die Antriebswellen einer Vielzahl an Transportmodulen, die auf der Lagerplatte einer Station eines Gutverarbeitungssystems angeordnet sind, können jeweils einer Zahnriemenscheibe zugeordnet montiert werden, die ein Teil einer Antriebsmechanik ist. Die Antriebsmechanik besteht aus einem gemeinsamen Teil, der auf die Transportelemente aller Transportmodule wirkt und jedes Transportmodul weist außerdem auch separate Getriebemittel auf, um die Transportelemente mit einer erforderlichen Antriebsenergie zu versorgen.

Eine in einer Anlegestation verbaute Antriebseinheit mit zugehöriger Antriebsmechanik für alle Transportmodule wird von einer Steuereinheit elektrisch angesteuert. Die Antriebseinheit kann von einer Steuereinheit in der Anlegestation oder von einer Steuereinheit in einer poststromabwärts angeordneten Vereinzelungsstation elektrisch angesteuert werden. Diese Steuereinheit enthält einen Programmspeicher für ein Programm, das die Profile für Laufzeit und Geschwindigkeit der Transportelemente vorgibt.

Damit eine Antriebsmechanik die Antriebsenergie eines einzigen Antriebsmotors über Getriebemittel möglichst verlustarm auf das Transportelement des Transportmodus übertragen kann und dennoch eine Lageausrichtung des Transportelements möglich ist, wird ein Transportmodul vorgeschlagen, welches einen rahmenförmigen Transportelementträger für die Getriebemittel des Transportelements aufweist.

Nach einer Montage sind die Transportmodule unterhalb des Anlegedecks angeordnet. Unterhalb des Anlegedecks ist auch eine Anordnung von einer Lageausrichtungsmechanik für das Transportmodul vorgesehen, die mechanisch mit einen ringförmigen Außenzahnkranz des rahmenförmigen Transportelementträger gekoppelt ist. Ein Betätigungsmittel kann über eine Bewegungsmechanik zur Veränderung der Ausrichtungsrichtung von einigen der Transportelemente mit einer Zahnstange der Lageausrichtungsmechanik mechanisch gekoppelt werden.

Unterhalb des rahmenförmigen Transportelementträgers ist außerdem ein Raum für eine gemeinsame Antriebsmechanik vorgesehen. Die gemeinsame Antriebsmechanik besteht mindestens aus einer Zahnriemenscheibe je Transportmodul, die von einem Zahnriemen angetrieben wird.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1, Längsschnitt durch einen erfindungsgemäßen Transportmodul,

Fig. 2, gesprengte perspektivische Darstellung des Transportmoduls,

Fig. 3, perspektivische Darstellung eines Ausschnitts der Anlegestation von rechts oben, mit einem montierten Transportmodul in einem ersten Zustand,

Fig. 4, perspektivische Darstellung eines Ausschnitts der Anlegestation von rechts oben, mit einem montierten Transportmodul in einem zweiten Zustand,

Fig. 5, Querschnitt durch eine Zahnriemenscheibe mit eingesteckter Antriebswelle des Transportmoduls.

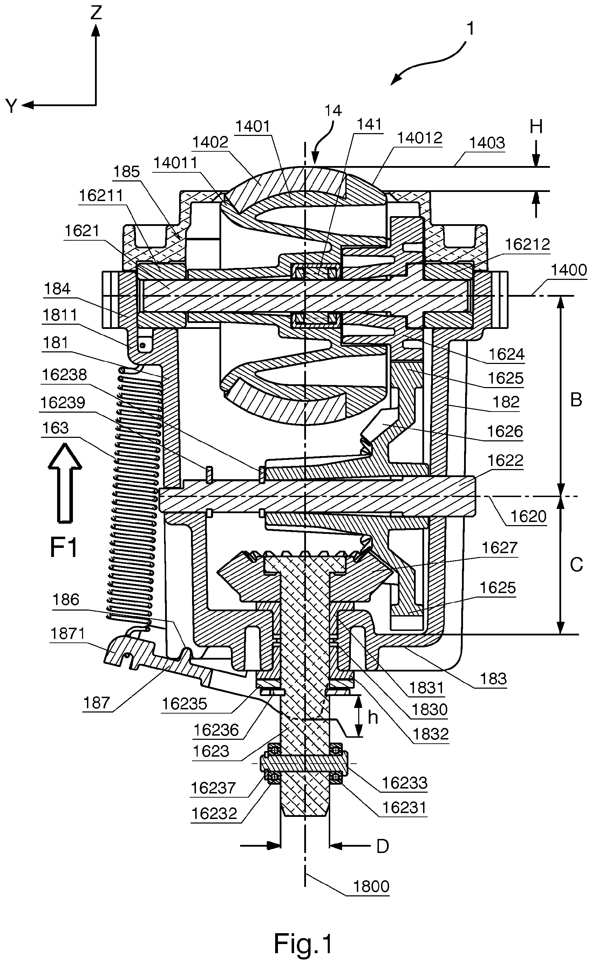

Die Fig. 1 zeigt einen Längsschnitt durch einen erfindungsgemäßen Transportmodul 1. Eine Drehachse 1800 des Transportmoduls 1 ist zugleich die Achse einer Antriebswelle 1623 am Fuße des Transportmoduls 1. Das Transportmodul 1 weist am kopfseitigen Ende ein Transportelement 14 auf, welches eine für die Traktion wirksame Höhe H hat, um auf die flachen Güter eine Traktionskraft in Transport- oder in Ausrichtungsrichtung des Transportelements ausüben zu können. Das Transportelement 14 ist in einem rahmenförmigen Transportelementträger drehbar gelagert und wird von der Antriebswelle 1623 angetrieben. Die Antriebswelle 1623 hat einen Durchmesser D und erstreckt sich in z-Richtung eines rechtshändigen kartesischen Koordinatensystems.

In der Darstellung nach Fig. 1 erstreckt sich eine Drehachse 1400 des Transportelements 14 in y-Richtung. Diese Richtung ist jedoch durch eine Drehung über Drehachse 1800 des Transportmoduls 1 beliebig veränderbar, wobei die Drehung des Transportmoduls on Demand über eine (nicht dargestellte) Lageausrichtungsmechanik durchführbar ist, die mechanisch mit einen ringförmigen Au-ßenzahnkranz an einem Trägerring 184 des Transportelementträgers des rahmenförmigen Transportelementträgers gekoppelt ist.

Jedes der Transportelemente 14 und deren Getriebemittel 1621 bis 1627 sind jeweils auf einem rahmenförmigen Transportelementträger montiert, der zwei gegenüberliegende Seitenschenkel 181, 182 aufweist, die über ein Trägerjoch 183 am Boden des Transportelementträgers miteinander verbunden sind. Der Trägerring 184 des Transportelementträgers ist im Oberteil des Transportelementträgers ausgebildet und liegt bei einem montierten Transportmodul an einem kreisrunden Lagerring auf der Unterseite des Anlegedecks an, wobei eine unterhalb einer Öffnung im Anlegedeck angeordnete erste drehbare Welle 1621 das Transportelement trägt, welches mit einer seitlichen Lauffläche 14012 seines Formdrehkörpers 1401 und mit seinem tonnenförmigen Gummimantel 1402 durch die vorgenannte Öffnung in z-Richtung hindurchragt. Der tonnenförmige Gummimantel 1402 ist auf den Formdrehkörper 1401 des Transportelements 14 aufmontiert und weist einen Reibwert $\mu$ auf, der je nach Materialpaarung in einem vorbestimmten Bereich liegt.

Die erste drehbare Welle 1621 ist beidseitig in Gleitlagern 16211, 16212 gelagert, die in entsprechend angepassten Aussparungen am Rand eines Innenraums des Trägerrings 184 eingepasst worden sind. Ein Haltering 185 des Transportelements 14 ist auf den Trägerring 184 aufgesteckt, um ein Herausfallen des Transportelements 14 samt seiner Welle 1621 mit Gleitlagern 16211, 16212 aus dem Innenraum des Trägerrings zu verhindern. Der Haltering 185 eines montierten Transportmoduls weist eine Oberfläche auf, die mit der Oberfläche des Anlegedecks abschließt, so dass ein Äquator 1403 des tonnenförmigen Gummimantels eine maximale Höhe H über der Oberfläche des Anlegedecks erreicht. Ein seitlicher Außenrand 14011 des Formdrehkörpers und die seitliche Lauffläche 14012 des Formdrehkörpers 1401 begrenzen den Gummimantel auf 60% bis 80% der Lauffläche des Transportelements 14. Ein Hülsenfreilauf 141 des Transportelements ist auf der ersten drehbaren Welle 1621 im Zentrum des Formdrehkörpers 1401 angeordnet.

Die Getriebemittel umfassen neben der ersten drehbaren Welle 1621 mit Gleitlagern 16211,16212 auch eine feststehende Lagerachse 1622 eines zweiten Zahnrades 1625 mit fest verbundenem Kegelrad 1626, das auf einer feststehenden Lagerachse 1622 drehbar gelagert ist. Die Getriebemittel umfassen weiter ein erstes Zahnrad 1624, welches über Formschluss fest mit der ersten drehbaren Welle verbunden ist und dessen Zähne mit den Zähnen des zweiten Zahnrads 1625 in Eingriff stehen. Die zentrale Mittelpunktlinie 1620 der feststehenden Lagerachse 1622 hat von der Drehachse 1400 des Transportelements 14 einen Abstand B. Auf der feststehende Lagerachse 1622 ist eine erste Sicherungsscheibe 16238 zur Begrenzung des Spiels des zweiten Zahnrads 1625 in Richtung der zentralen Mittelpunktlinie 1620 und eine zweite Sicherungsscheibe 16239 nahe dem Seitenschenkel 181 vorgesehen. Das zweite Zahnrad 1625 hat einen Radius der kleiner ist, als ein Abstand C zwischen der feststehende Achse 1622 und der Jochinnenwand, wobei das Joch 183 des Transportelementträgers 18 in der Mitte eine zentrale Öffnung 1830 für zwei radiale Gleitlager 1831, 1832 aufweist, in welchen die Antriebswelle 1623 drehbar gelagert ist. Eine Sicherungsscheibe 16236 verhindert ein Verrutschen der Antriebswelle 1623 in z-Richtung. Zwischen der Sicherungsscheibe 16236 und dem radialen Gleitlager 1832 ist eine Unterlegscheibe 16235 angeordnet.

Das Kegelzahnrad 1626, das fest mit dem zweiten Zahnrad 1625 verbunden ist, steht in Eingriff mit einem Kegelzahnrad 1627, das mit der Antriebswelle 1623 formschlüssig verbunden ist.

Neben der Antriebsmechanik und den Getriebemitteln sind Federmittel, vorzugsweise eine Zugfeder 163 und ein Hebel 187 am Transportelementträger vorgesehen, wobei letztgenannter aufgrund einer Kraft F2 entgegen der Federkraft F1 in Achsrichtung verschiebbar ist. Durch die Kraftwirkung der Kraft F2 taucht das Transportmodul 1 unter die Oberfläche 1201 des Anlegedecks 12, was eine Reibwertbegrenzung ermöglicht, wenn die Federkraft F1 entsprechend abgestimmt gewählt wird. Die Zugfeder 163 ist seitlich des Jochs 181 einerseits in einer Einhängeöffnung 1811 und andererseits an einem Haken 1871 an einem Hebelende eines Hebels 187 nahe dem Joch 183 montiert. Die Zugfeder ist vorgespannt nachdem sie an dem Transportelementträger 18 montiert worden ist. Der Hebel 187 ist kippbar in einer Nut 186 gelagert, wobei die Nut am unteren dem Joch nahem Ende des Seitenschenkels 181 des Transportelementträgers eingeformt ist.

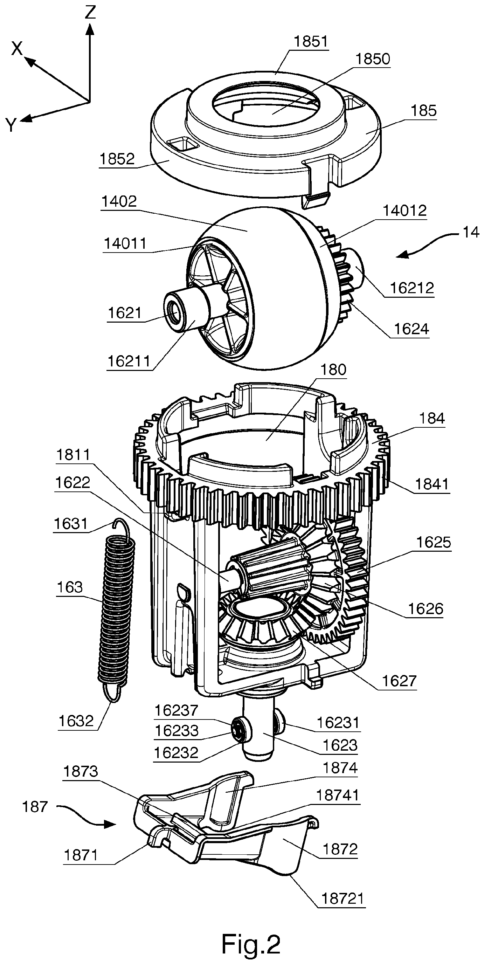

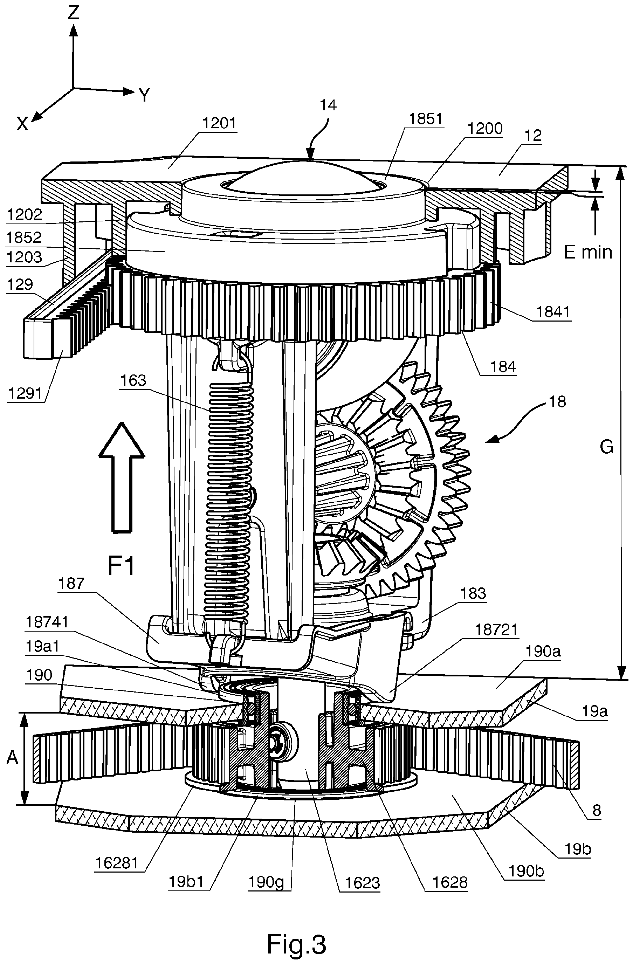

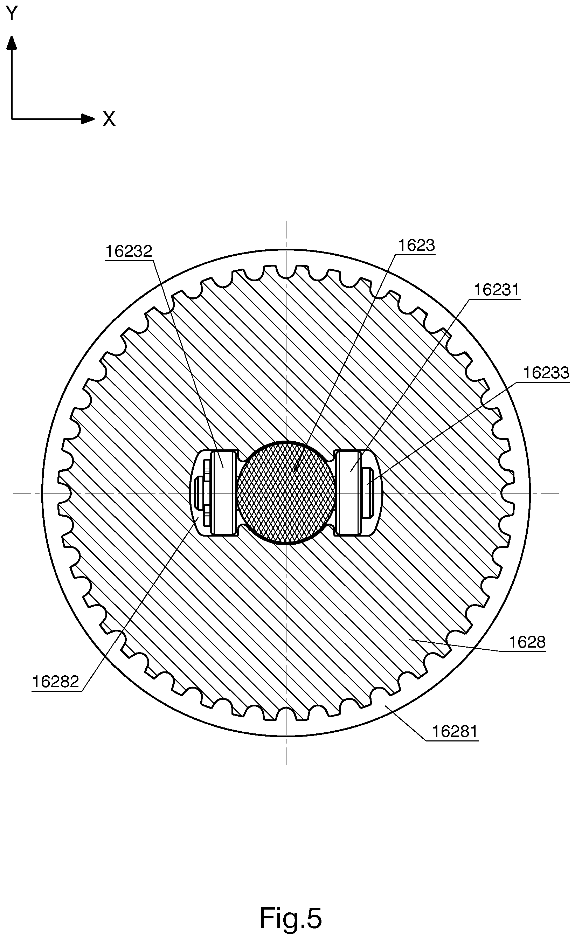

Die Antriebswelle 1623 des Transportmoduls weist Lager 16231, 16232 mit geringer Reibung - vorzugsweise Kugellager - auf, einen Lagerstift 16233 für die Lager 16231, 16232 und eine Sicherungsscheibe 16237 für den Lagerstift 16233 auf. Die Antriebswelle 1623 ist aufgrund der Lager formschlüssig aber verschiebbar in axialer Richtung mit einer Zahnriemenscheibe (in Fig.3 gezeigt) verbindbar gestaltet. Dadurch erhält die Antriebswelle 1623 im Querschnitt eine Formkontur, die weiter unten anhand der Figur 5 noch erläutert wird. Die Fig. 2 zeigt eine gesprengte perspektivische Darstellung des Transportmoduls. Entgegen der z-Richtung, das heißt bei einem Transportmodul, welches in eine Station eines Gutverarbeitungssystems montiert wurde, in Schwerkraftrichtung sind die folgenden Bauteile des Transportmoduls. dargestellt:

Ein Haltering 185 des Transportelements 14, der auf den Trägerring 184 steckbar ist und mit diesem über eine Snap-in-Verbindung befestigt werden kann, ist in z-Richtung scheibenförmig abgestuft und weist eine kreisförmige Öffnung 1850 in einer oberen kreisförmigen Scheibe auf, die einen kleineren Durchmesser hat. Die obere kreisförmige Scheibe des Halterings hat eine Oberfläche 1851 in z-Richtung. Die untere kreisförmige Scheibe des Halterings hat am Außendurchmesser 1852 einen ringförmigen Kragen, der auf eine kopfseitige Struktur des Transportmoduls aufsteckbar ist und als kopfseitiges Lager an der Unterseite des Anlegedecks dient.

Die kopfseitige Struktur im Innenraum einer zentralen Öffnung 180 des Trägerrings 184 ist an einem jeweils ersten Ende der Seitenschenkel 181, 182 des Transportelementträgers ausgebildet und so geformt, dass die Gleitlager 16211, 16212 der ersten drehbaren Welle 1621 eingepasst werden können. Das Transportelement 14 und ein erstes Zahnrad 1624 sind über Formschluss fest mit der ersten drehbaren Welle verbunden. Das Transportelement 14 trägt einen tonnenförmigen, Gummimantel 1402 mit einem vorbestimmten Reibwert auf dem Formdrehkörper, wobei der Gummimantel 1402 zwischen einem seitlichen Außenrand 14011 und der seitlichen Lauffläche 14012 des Formdrehkörpers angeordnet ist. Der Trägerring 184 trägt einen ringförmigen Außenzahnkranz 1841.

Nahe dem einen Seitenschenkel (182 siehe Fig.1) ist ein zweites Zahnrad 1625 und ein Kegelzahnrad 1625 dargestellt, die fest miteinander verbunden auf der feststehenden Lagerachse 1622 drehbar gelagert sind, wobei ein mit der Antriebswelle 1623 formschlüssig verbundenes Kegelzahnrad 1627 das vorgenannte Kegelzahnrad 1625 antreibt. Auf der Antriebswelle 1623 des Transportmoduls sind zwei Lager 16231, 16232 mit geringer Reibung, vorzugsweise Kugellager, gegenüberliegend angeordnet, die auf einem Lagerstift 16233 montiert sind, der mittels einer Sicherungsscheibe 16237 befestigt ist.

An dem anderen Seitenschenkel (181 siehe Fig.1) ist eine Einhängeöffnung 1811 für die Öse 1631 einer Zugfeder 163 vorgesehen, deren andere Öse 1632 an einem Haken 1871 eines Hebel 187 eingehängt werden kann. Der Hebel 187 weist an seinem kürzerem Hebelarm, also an einem zu dem Haken 1871 näher liegenden Teil des Hebels, eine Drehkante 1873 des Hebels 187 in einem Abstand zu dem Haken 1871 auf. Der Hebel 187 weist an seinem anderen längeren Hebelarm, also an dem Haken 1871 gegenüberliegenden Ende eine Weggabelung in zwei Hebelarme 1872, 1874 auf, welche zur Reibwertbegrenzung wirksame Hebelenden 18721, 18741 haben, die sich an einer Lagerplatte (19a siehe Fig. 3) abstützen.

Die Fig. 3 zeigt eine perspektivische Darstellung eines Ausschnitts der Anlegestation von rechts oben, mit einem montierten Transportmodul in einem ersten Zustand ohne Reibwertbegrenzung. Der Transportelementträger 18 ist zwischen dem Anlegedeck 12 der Anlegestation und einer zwischendeckartig angeordneten Lagerplatte 19a angeordnet, wobei sich die zur Reibwertbegrenzung wirksamen Hebelenden 18721, 18741 des Hebels 187 einerseits an der Oberfläche 190a der Lagerplatte 19a abstützen und andererseits liegt die Drehkante (1873 siehe Fig.2) am Trägerjoch 183, so dass der Transportmodul aufgrund der Kraft F1 der Zugfeder 163 in z-Richtung maximal angehoben wird, so dass ein vierter Abstand E zwischen der Oberfläche 1201 des Anlegedecks und der Oberfläche 1851 einer oberen kreisförmigen Scheibe des Halterings (185, siehe Fig. 2) minimal wird. In Folge dessen ragt das Transportelement 14 um eine für die Traktion wirksamen Höhe H über die Oberfläche des Anlegedecks 1201 hinaus. Ein fünfter Abstand G der Oberfläche des Anlegedecks 1201 zur Oberseite der Lagerplatte 19a ohne dem Überstand H (Fig.1) des Tonnenäquators 1403 des Transportelements 14 zur Oberfläche des Halterings 1851 entspricht der Länge des montierten Transportmoduls in z-Richtung in dem ersten Zustand ohne Reibwertbegrenzung.

Eine kreisförmige Öffnung 1200 im Anlegedeck 12 ist zur Aufnahme der oberen kreisförmigen Scheibe des Halterings (185, siehe Fig. 2) vorgesehen, wobei der Haltering das Herausfallen des Transportelements 14 aus dem Innenraum des Trägerrings 184 verhindert.

Der ringförmige Kragen am Außendurchmesser 1852 der unteren kreisförmigen Scheibe des Halterings (185, siehe Fig. 2) ist als kopfseitiges Lager ausgebildet, welches innerhalb eines an der Unterseite des Anlegedecks 12 angeformten kreisrunden Lagerring 1202 gelagert ist. Ein fußseitiges erstes Lager 19a1 ist in einem Lagerloch 190 der Lagerplatte 19a angeordnet, wobei im Lager 19a eine Zahnriemenscheibe 1628 drehbar gelagert und die Antriebswelle 1623 verschiebbar in einer zentralen Öffnung der Zahnriemenscheibe 1628 gelagert ist. Das Lager 19a1 soll eine geringe Reibung aufweisen, vorzugsweise wird ein Kugellager eingesetzt. Die Zahnriemenscheibe 1628 weist einen Zahnriemenscheibenrand 16281 mit einem größeren Durchmesser auf, als der Durchmesser der Zahnriemenscheibe. Im Lager 19a steckt ein zylinderförmiges Formstück der Zahnriemenscheibe 1628 mit der zentralen Öffnung, wobei das zylinderförmige Formstück auf der gegenüberliegenden Seite auch in einem zweiten Lager 19b1 steckt, dass in einem zweiten Lagerloch 190g einer Gegenlagerplatte 19b angeordnet ist und wodurch die Zahnriemenscheibe 1628 drehbar gelagert wird. Auch das Lager 19b1 soll eine möglichst geringe Reibung aufweisen, vorzugsweise wird ebenfalls ein Kugellager eingesetzt. Die Oberseite 190b der Gegenlagerplatte 19b verdeckt zwar in der Darstellung das zylinderförmige Formstück und das zweite Lager 19b1 jedoch sind diese beiden Lager in ihren Abmaßen gleich.

Ein Betätigungsmittel (nicht gezeigt) kann über eine Bewegungsmechanik zur Veränderung der Ausrichtungsrichtung von einigen der Transportelemente 14 mit einer Zahnstange 129 einer Lageausrichtungsmechanik mechanisch gekoppelt werden. Die Zahnstange 129 weist mindestens einseitig Zähne 1291 auf, die sich mit den Zähnen eines ringförmigen Außenzahnkranz 1841 des Trägerrings 184 in Eingriff befinden. Der Trägerring 184 dreht bei einer Bewegung der Zahnstange 129 die sich in einem Raum bewegt, der in einer zur y-Richtung entgegengesetzten Richtung durch eine Führungswand 1203 begrenzt ist, die an der Unterseite des Anlegedecks 12 angeformt ist.

Alternativ zu dem Betätigungsmittel kann über eine Bewegungsmechanik ein Antriebsmittel mit der Zahnstange 129 einer Lageausrichtungsmechanik mechanisch gekoppelt werden, wobei das Antriebsmittel von einer Steuereinheit angesteuert wird.

Das Transportmodul ist um eine Achse der Antriebswelle 1623 drehbar gelagert und in Achsrichtung verschiebbar angeordnet, wobei die Antriebswelle 1623 auf der Lagerplatte 19a orthogonal stehend und in Achsrichtung parallel zur z-Richtung ausgerichtet ist. Die Drehachse des Transportmoduls ist zugleich die Achse der Antriebswelle 1623.

Unterhalb des Anlegedecks 12 ist ein Raum für die Antriebsmechanik vorgesehen. Ein Raum wird in z-Richtung begrenzt durch den ersten Abstand A zwischen der Lagerplatte 19a und der Gegenlagerplatte 19b und ist für einen gemeinsamen Antrieb einer Vielzahl von Transportmodulen vorgesehen. Der gemeinsame Antrieb umfaßt eine Antriebseinheit und beispielsweise einen Zahnriemen 8 und eine Zahnriemenscheibe 1628. Die zentrale Öffnung der Zahnriemenscheibe 1628 weist eine Formkontur in axialer Richtung auf (was anhand der Fig. 5 später noch erläutert wird), in welcher die Antriebswelle 1623 des Transportmoduls formschlüssig aber in der axialen Richtung (z-Richtung) leicht verschiebbar gelagert ist.

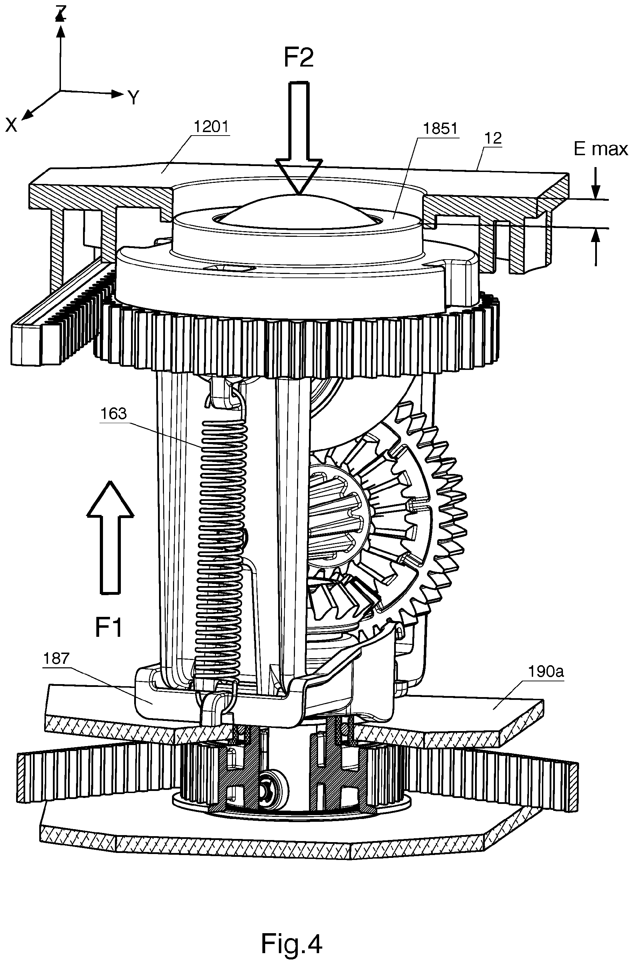

Die Fig. 4 zeigt eine perspektivische Darstellung des Ausschnitts der Anlegestation von rechts oben, mit einem montierten Transportmodul in einem zweiten Zustand mit Reibwertbegrenzung. Der Hebel 187 liegt nun auf der Oberseite 190a der Lagerplatte 19a vollständig auf. Der vierte Abstand E zwischen der Oberfläche 1201 des Anlegedecks 12 und der Oberfläche 1851 einer oberen kreisförmigen Scheibe des Halterings (185, siehe Fig. 2) wird maximal, weil der Transportmodul in dem Falle, in welchem die Andruckkraft F2 größer als die Federkraft F1 ist, nicht mehr aufgrund der Kraft F1 der Federmittel 163 in z-Richtung angehoben wird. Das Transportelement 14 sinkt in Schwerkraftrichtung herab, so dass das Transportelement 14 nicht mehr über die Oberfläche des Anlegedecks 1201 hinaus ragt. Die minimale Länge des montierten Transportmoduls in z-Richtung in dem zweiten Zustand entspricht einer Differenz des fünften Abstands G der Oberfläche des Anlegedecks 1201 zur Oberseite 190a der Lagerplatte 19a minus dem vierten Abstands E zwischen der Oberfläche 1201 des Anlegedecks 12 und der Oberfläche 1851 der oberen kreisförmigen Scheibe des Halterings 185.

Die Fig. 5 zeigt einen Querschnitt durch eine Zahnriemenscheibe mit eingesteckter Antriebswelle des Transportmoduls. Die Zahnriemenscheibe hat einen Zahnriemenscheibenrand 16281 mit einem größeren Durchmesser, als der Außendurchmesser der Zahnriemenscheibe 1628. Die zentrale Öffnung der Zahnriemenscheibe 1628 weist eine Formkontur 16282 mit vorbestimmtem Profil auf, in welcher die Antriebswelle 1623 des Transportmoduls formschlüssig aber in der axialen Richtung (z-Richtung) in leichter Weise verschiebbar gelagert ist. An der Antriebswelle 1623 des Transportmoduls sind die Lager 16231, 16232 mit geringer Reibung auf einem Lagerstift 16233 angeordnet. Das Profil ist entsprechend den Abmaßen des Durchmessers der an der Antriebswelle montierten Kugellager angepasst gestaltet. Der Durchmesser des Profils ist geringfügig weiter, als der Durchmesser der Kugellager, so dass eine Verschiebung der Antriebswelle 1623 in der axialen Richtung (z-Richtung) leichtgängig ist.

Wenn im vorliegenden Beispiel eine bestimmte Ausführungsform, nämlich bevorzugt eine ersten Variante des Transportmoduls näher erläutert wurde, soll aber dadurch nicht eine andere Ausführungsform nach einer weiteren Variante vom Schutzumfang ausgeschlossen werden, die - vom gleichen Grundgedanken der Erfindung ausgehend - eingesetzt werden kann und von den anliegenden Schutzansprüchen umfasst wird.

**Patentansprüche**

1. Transportmodul für flache Güter, umfassend mindestens ein Transportelement (14), welches in einem Transportelementträger gelagert ist, der eine Antriebswelle aufweist, wobei jedes Transportmodul einer Vielzahl an Transportmodulen für eine Montage in einer Station eines Gutverarbeitungssystems ausgebildet und gleich aufgebaut ist, wobei das Transportelement (14) von der Antriebswelle (1623) über Getriebemittel des Transportmoduls angetrieben wird, wobei der Transportelementträger (18) die Getriebemittel des Transportmoduls trägt, **gekennzeichnet dadurch,**

   - **dass** das Transportelement (14) auf der einen Seite einen geringeren Reibwert aufweist, als auf der anderen Seite eines Äquators, wobei der Transportelementträger (18) ein Federmittel aufweist, das eine Verschiebung des Transportelementträgers (18) in und entgegen der Schwerkraftrichtung zulässt, wobei das montierte Transportmodul um eine Achse (1800) der Antriebwelle (1623) drehbar gelagert ist.

2. Transportmodul, nach Anspruch 1, **gekennzeichnet dadurch, dass** - der Transportelementträger zwei Seitenschenkel (181, 182) und ein Trägerjoch (183) aufweist, die rahmenförmig angeordnet sind.

3. Transportmodul, nach den Ansprüchen 1 und 2, **gekennzeichnet dadurch,**

- **dass** das Transportelement (14) in einem Trägerring (184) montiert ist, der in Schwerkraftrichtung in die Seitenschenkel übergeht, wobei das Transportelement (14) aus einem um eine Drehachse (1400) drehbaren Formdrehkörper (1401) mit einem tonnenförmigen Gummimantel (1402) besteht und wobei die Drehachse (1400) durch den Mittelpunkt eines Querschnitts einer ersten drehbaren geraden Welle (1621) verläuft, die in Lagern (16211, 16212) läuft, welche an einem jeweils ersten Ende der Seitenschenkel (181, 182) des Transportelementträgers (18) gelagert sind,
- die zwei Seitenschenkel (181, 182) an einem jeweils anderen Ende über das Trägerjoch (183) miteinander verbunden sind,
- das montierte Transportmodul entgegen einer Federkraft (F1) in Schwerkraftrichtung sowie dazu entgegengesetzt in z-Richtung verschiebbar angeordnet ist, wobei die Antriebswelle eines montierten Transportmoduls in Schwerkraftrichtung aus dem Transportelementträger in einer Länge hervorragt, die mindestens einer Summe aus einen ersten Abstand (A) und einem Hub (h) entspricht, wobei der ersten Abstand (A) für einen gemeinsamen Antrieb einer Vielzahl von Transportmodulen vorgesehen ist, und der Hub (h) einer für die Traktion wirksamen Höhe (H) eines Kreissegments am Äquator eines Querschnitts durch das Transportelement (14) entspricht,
- eine feststehende gerade Achse (1622) parallel der ersten drehbaren geraden Welle (1621) in einem zweiten Abstand (B) unterhalb der ersten drehbaren geraden Welle (1621) und in einem dritten Abstand (C) von der Innenwand am Boden des Trägerjoch (183) in den Seitenschenkeln (181, 182) des Transportelementträgers (18) montiert ist,
- das Trägerjoch (183) in seiner Mitte eine Lagerbohrung (1830) mit einem vorbestimmten Lagerdurchmesser für ein erstes und zweites radiales Gleitlager (1831, 1832) der Antriebswelle (1623) aufweist,
- die Antriebswelle (1623) einen Durchmesser (D) hat und drehbar in den ersten und zweiten radialen Gleitlagern (1831, 1832) montiert ist, wobei die Gleitlager (1831, 1832) des unterhalb eines Anlegedecks (12) einer Anlegestation montierten Transportmoduls zu einem Lagerloch (190) einer Lagerplatte (19a) fluchtend so montiert ist, dass die Achse (1800) des Transportelementträgers durch den Mittelpunkt des Querschnitts der Antriebswelle und durch den Mittelpunkt des Lagerlochs (190) verläuft,
- ein erstes Zahnrad (1624) auf der ersten drehbaren geraden Welle (1621) formschlüssig montiert und ein zweites Zahnrad (1625) auf der feststehenden geraden Lagerachse (1622) drehbar gelagert ist, wobei nach deren Montage im Transportelementträger (18), die Zähne der vorgenannten ersten und zweiten Zahnräder (1624, 1625) ineinander greifen,
- ein erstes Kegelzahnrad (1627) mit der Antriebswelle (1623) formschlüssig verbunden ist, dass ein zweites Kegelzahnrad (1626) und das zweite Zahnrad (1625) auf der zweiten Lagerwelle (1622) gemeinsam montiert und formschlüssig und/oder stoffschlüssig miteinander verbunden sind, wobei die beiden Kegelzahnräder (1626, 1627) im Transportelementträger (18) so zueinander ausgerichtet und montiert sind, dass beide ein Kegelradwälzgetriebe bilden, und
- die Federmittel eine Zugfeder (163) und einen Hebel (187) umfassen, dass die Zugfeder (163) jeweils an dem Transportelementträger (18) montiert ist.

4. Transportmodul, nach den Ansprüchen 1 bis 3, **gekennzeichnet dadurch,**

- **dass** bei einer Montage des Transportmoduls unterhalb eines Anlegedecks (12) einer Anlegestation das Lagerloch (1830) des Trägerjochs (183) und ein Lager (19a1) in einer Öffnung (190) der Lagerplatte (19a) zueinander ausgerichtet sind und dass das Federmittel am Transportelementträger montiert und zwischen dem Trägerjoch (183) und der Lagerplatte (19a) wirksam ist, so das ein vierter Abstand (E) zwischen der Oberfläche des Anlegedecks (1201) und der Oberfläche (1851) des Halterings minimal ist, wenn keine Kraft F2 auf das Transportelement (14) einwirkt und
- **dass** die maximale Läge des montierten Transportmoduls in z-Richtung im ersten Zustand ohne Reibwertbegrenzung einem fünften Abstand (G) der Oberfläche (1201) des Anlegedecks (12) zur Oberseite (190a) der Lagerplatte (19a) entspricht.

5. Transportmodul, nach den Ansprüchen 1 bis 3, **gekennzeichnet dadurch, dass** der auf den Formdrehkörper aufgebrachte tonnenförmige Gummimantel unsymmetrisch zu seinem Tonnenäquator angeordnet ist, so daß die Oberfläche des Transportelements (14) auf der einen Seite des Tonnenäquators in eine seitliche Lauffläche (14012) des Formdrehkörpers (1401) übergeht, welche einen geringeren Reibwert aufweist, als der Gummimantel.

6. Transportmodul, nach den Ansprüchen 1 bis 4, **gekennzeichnet dadurch, dass** das Federmittel eine Zugfeder (163) ist, die bei einer Montage des Transportmoduls auf einer Lagerplatte (190a) einer Station eines Gutverarbeitungssystems vorgespannt wird und die Antriebwelle (1623) einer Vielzahl an Transportmodulen auf der Lagerplatte (190a) einer Station eines Gutverarbeitungssystems jeweils einer Zahnriemenscheibe (1628) zugeordnet montierbar angeordnet sind, wobei die Antriebswelle (1623) jedes der Transportelemente (14) formschlüssig aber verschiebbar in axialer Richtung mit der jeweils einen Zahnriemenscheibe (1628) verbindbar gestaltet ist, wobei die Zahnriemenscheibe (1628) eine zentrale Öffnung mit einem im Querschnitt vorbestimmten Profil aufweist, wobei das Profil entsprechend den Abmaßen des Durchmessers der an der Antriebswelle montierten Kugellager angepasst gestaltet ist.

7. Transportmodul, nach Anspruch 6, **gekennzeichnet dadurch, dass** die Station eines Gutverarbeitungssystems eine Anlegestation (10) ist.

8. Transportmodul, nach Anspruch 7, **gekennzeichnet dadurch, dass** ein Betätigungsmittel über eine Bewegungsmechanik zur Veränderung der Ausrichtungsrichtung von einigen der Transportelemente (14) mit einer Zahnstange (129) einer Lageausrichtungsmechanik mechanisch gekoppelt ist, wobei die Bewegungsmechanik in einem Bereich zwischen der Ausrichtwand und der Vorderseite der Anlegestation (10) und unterhalb des Anlegedecks (12) angeordnet ist.

9. Transportmodul, nach Anspruch 8, **gekennzeichnet dadurch, dass** das Betätigungsmittel ein Einstellrad ist.

10. Transportmodul, nach Anspruch 1, **gekennzeichnet dadurch, dass** die flachen Güter Poststücke sind.

**Claims**

1. Transport module for flat items comprising at least one transport element (14) borne in a transport element carrier having a drive shaft, wherein each transport module of a plurality of transport modules is made for installation in a station of an item processing systems and is of an equal design, wherein the transport element (14) is driven by the drive shaft (1623) via transmission means of the transport module, wherein the transport element carrier (18) carries the transmission means of the transport module, **characterized in that**

   - the transport element (14) has a lower friction coefficient on the one side than on the other side of an equator; that the transport element carrier (18) has spring means that allow its shifting in and contrary to the direction of gravity; and the installed transport module being borne rotatably around an axis (1800) of the drive shaft (1623).

2. Transport module according to Claim 1, **characterized in that**

   - the transport element carrier has two lateral legs (181, 182) and a carrier yoke (183) that are arranged in the form of a frame.

3. Transport module according to Claims 1 and 2, **characterized in that**

   - the transport element (14) is mounted in a carrier ring (184) that passes into the lateral legs in the direction of gravity, wherein the transport element (14) consists of a molded body of rotation (1401) rotatable around a rotation axis (1400) with a barrel-shaped rubber coat (1402), and wherein the rotation axis (1400) runs through the center point of a cross section of a first straight rotary shaft (1621) that runs in bearings (16211, 16212) which are borne on a respective first end of the lateral legs (181, 182) of the transport element carrier (18);
   - the two lateral legs (181, 182) are connected with each other by the carrier yoke (183) on a respective other end (183);
   - the installed transport module is arranged shiftably against a spring force (F1) in the direction of gravity and contrary to it in z-direction, wherein the drive shaft of an installed transport module projects in the direction of gravity from the transport element carrier in a length corresponding at least to a sum of a first distance (A) and a stroke (h), the first distance (A) being provided for a common drive of a plurality of transport modules and the stroke (a) corresponding to a height (H) of a circle segment on the equator of a cross section of the transport element (14) that is effective for the traction;
   - a fixed straight axle (1622) is mounted in parallel to the first straight rotary shaft (1621) at a second distance (B) below the first straight rotary shaft (1621) and at a third distance (C) from the inner wall on the bottom of the carrier yoke (183) in the lateral legs (181, 182) of the transport element carrier (18);
   - the carrier yoke (183) has in its center a bearing hole (1830) with a pre-defined bearing diameter for a first and a second radial slide bearing (1831, 1832) of the drive shaft (1623);
   - the drive shaft (1623) has a diameter (D) and is rotatably mounted in the first and second radial slide bearings (1831, 1832), wherein the slide bearings (1831, 1832) of the transport module mounted below a placement deck (12) of a placement station are mounted flush with a bearing hole (190) of a bearing plate (19a) in such a manner that the axis (1800) of the transport element carrier runs through the center point of the cross section of the drive shaft and through the center point of the bearing hole (190);

- a first gear wheel (1624) is mounted by positive joint on the first straight rotary shaft (1621) and a second gear wheel (1625) is rotatably borne on the fixed straight bearing axle (1622), wherein, after their assembly in the transport element carrier (18), the teeth of said first and second gear wheels (1624, 1625) are in engagement with each other;

- a first bevel gear (1627) is connected by positive joint with the drive shaft (1623), and that a second bevel gear (1626) and the second gear wheel (1625) are jointly mounted on the second bearing shaft (1622) and connected with each other by positive joint and/or firm bonding, wherein the two bevel gears (1626, 1627) are oriented to one another and mounted in the transport element carrier (18) to form a bevel-gear rolling-contact gear unit; and

- the spring means comprise a tension spring (163) and a lever (187), and that the tension spring (163) is respectively mounted on the transport element carrier (18).

4. Transport module according to Claims 1 to 3, **characterized in that**

- when the transport module is installed below a placement deck (12) of a placement station, the bearing hole (1830) of the carrier yoke (183) and a bearing (19a1) in in an opening (190) of the bearing plate (19a) are aligned with one another, and that the spring means is mounted on the transport element carrier and effective between the carrier yoke (183) and the bearing plate (19a), so that a fourth distance (E) between the surface of the placement deck (1201) and the surface (1851) of the retaining ring is minimal when no force F2 is acting on the transport element (14); and

- in the first state without limitation of the friction value, the maximum length of the installed transport module in z-direction corresponds to a fifth distance (G) of the surface (1201) of the placement deck (12) to the top side (190a) of the bearing plate (19a):

5. Transport module according to Claims 1 to 3, **characterized in that** the barrel-shaped rubber coat applied on the molded body of rotation is asymmetrically arranged in relation to its barrel equator so that, on the one side of the barrel equator, the surface of the transport element (14) passes into a lateral running surface (14012) of the molded body of rotation (1401) that has a lower friction value than the rubber coat.

6. Transport module according to Claims 1 to 4, **characterized in that** the spring means is a tension spring (163) that is pre-tensioned in an installation of the transport module on a bearing plate (190a) of a station of an item processing system and the drive shaft (1623) of a plurality of transport modules on the bearing plate (190a) of a station of an item processing system is arranged mountably assigned to a respective toothed belt disc (1628), wherein the drive shaft (1623) of each of the transport elements (14) is designed connectable with the respective one toothed belt disc (1628) by positive lock, but shiftable in axial direction, wherein the toothed belt disc (1628) has a central opening with a profile of a pre-defined cross section, said profile being shaped in a manner adapted to the dimensions of the diameter of the ball bearings mounted on the drive shaft.

7. Transport module according to Claim 6, **characterized in that** the station of an item processing system is a placement station (10).

8. Transport module according to Claim 7, **characterized in that,** via a movement mechanism for changing the alignment direction of some of the transport elements (14), an actuating means is mechanically coupled with a toothed rack (129) of a direction alignment mechanism, said direction alignment mechanism being arranged in an area between the alignment wall and the front side of the placement station (10) and below the placement deck (12).

9. Transport module according to Claim 8, **characterized in that** the actuating means is a setting dial.

10. Transport module according to Claim 1, **characterized in that** the flat items are mail items.

**Revendications**

1. Module de transport pour des produits plats, comprenant au moins un élément de transport (14), lequel est logé dans un support d'élément de transport qui comporte un arbre d'entraînement, chaque module de transport d'une pluralité de modules de transport étant conçu pour un montage dans un poste d'un système de traitement de produits et étant de conception identique, l'élément de transport (14) étant entraîné par l'arbre d'entraînement (1623) par l'intermédiaire de moyens de transmission du module de transport, le support d'élément de transport (18) portant les moyens de transmission du module de transport,
**caractérisé en ce que**,

- sur l'un des côtés, l'élément de transport (14) présente un coefficient de frottement plus faible que sur l'autre côté d'un équateur, le support d'élément de transport (18) comportant un moyen à ressort qui admet un déplacement du support d'élément de transport (18) dans et à l'encontre du sens de la pesanteur, le module de transport monté étant logé en étant rotatif autour d'un axe (1800) de l'arbre d'entraînement (1623).

2. Module de transport, selon la revendication 1, **caractérisé en ce que** le support d'élément de transport comporte deux branches latérales (181, 182) et un joug porteur (183) qui sont placés en forme de cadre.

3. Module de transport, selon les revendications 1 et 2, **caractérisé en ce que**

- l'élément de transport (14) est monté dans une bague de support (184) qui dans le sens de la pesanteur passe dans les branches latérales, l'élément de transport (14) étant constitué d'un corps moulé rotatif (1401) rotatif autour d'un axe de rotation (1400), avec une enveloppe en caoutchouc (1402) en forme de barillet et l'axe de rotation (1400) s'écoulant à travers un point médian d'une section transversale d'un premier arbre (1621) rectiligne rotatif, qui fonctionne dans des paliers (16211, 16212), lesquels sont logés sur une première extrémité respective des branches latérales (181, 182) du support d'élément de transport (18),
- les deux branches latérales (181, 182) sont reliées l'une à l'autre sur une autre extrémité respective par l'intermédiaire du joug porteur (183),
- le module de transport monté est placé en étant déplaçable à l'encontre d'une force de ressort (F1) dans le sens de la pesanteur, ainsi qu'à l'opposé de ce dernier, dans la direction Z l'arbre d'entraînement d'un module de transport monté saillant dans le sens de la pesanteur hors du support d'élément de transport d'une longueur qui correspond au moins à une somme d'un premier écart (A) et d'une course (h), le premier écart (A) étant prévu pour un entraînement commun d'une pluralité de modules de transport et la course (h) correspondant à une hauteur (H) efficace pour la traction d'un segment de cercle sur l'équateur d'une section transversale à travers l'élément de transport (14),
- un axe (1622) stationnaire rectiligne est monté à la parallèle du premier arbre (1621) rectiligne rotatif, avec un deuxième écart (B) en dessous du premier arbre (1621) rectiligne rotatif et avec un troisième écart (C) de la paroi intérieure sur le fond inférieur du joug porteur (183) dans les branches latérales (181, 182) du support d'élément de transport (18),
- le joug porteur (183) comporte en son centre un alésage de palier (1830) avec un diamètre de palier prédéfini pour un premier et un deuxième paliers lisses (1831, 1832) radiaux de l'arbre d'entraînement (1623),
- l'arbre d'entraînement (1623) a un diamètre (D) et est monté de manière rotative dans les premier et deuxième paliers lisses (1831, 1832) radiaux, les paliers lisses (1831, 1832) du module de transport monté en-dessous d'un pont d'accostage (12) d'un poste d'accostage étant montés en alignement par rapport à un trou de logement (190) d'une plaque d'appui (19a) de telle sorte que l'axe (1800) du support d'élément de transport s'écoule à travers le point médian de la section transversale de l'arbre d'entraînement et à travers le point médian du trou de logement (190),
- une première roue dentée (1624) est montée par complémentarité de forme sur le premier arbre (1621) rectiligne rotatif et une deuxième roue dentée (1625) est logée de manière rotative sur l'axe de palier (1622) stationnaire rectiligne, après leur montage dans le support d'élément de transport (18), les dents des première et deuxième roues dentées (1624, 1625) précédemment citées s'engrenant les unes dans les autres,
- un premier pignon conique (1627) est relié par complémentarité de forme avec l'arbre d'entraînement (1623), **en ce qu'**un deuxième pignon conique (1626) et la deuxième roue dentée (1625) sont montés en commun sur le deuxième arbre de palier (1622) et sont reliés l'un à l'autre par complémentarité de forme et/ou par matière, les deux pignon coniques (1626, 1627) étant orientés l'un par rapport à l'autre et montés sur le support d'élément de transport (18) de telle sorte que les deux forment un engrenage à roulement à pignon conique,
- les moyens à ressort comprennent un ressort de traction (163) et un levier (187), **en ce que** le ressort de traction (163) est respectivement monté sur le support d'élément de transport (18).

4. Module de transport, selon les revendications 1 à 3, **caractérisé en ce que**

- lors d'un montage du module de transport en-dessous d'un pont d'accostage (12) d'un poste d'accostage, le trou de logement (1830) du joug porteur (183) et un palier (19a1) sont orientés l'un par rapport à l'autre dans un orifice (190) de la plaque d'appui (19a) et **en ce que** le moyen à ressort est monté sur le support d'élément de transport et est actif entre le joug porteur (183) et la plaque d'appui (19a) de telle sorte qu'un quatrième écart (E) entre la surface du pont d'accostage (1201) et la surface (1851) de la bague de maintien soit minimal, lorsqu'aucune force F2 n'agit sur l'élément de transport (14) et - **en ce que**, dans le premier état, la position maximale du module de transport monté dans la direction Z correspond sans limitation du coefficient de frottement à un cinquième écart (G) entre la surface (1201) du pont d'accostage (12) et la face supérieure (190a) de la plaque d'appui (19a).

5. Module de transport, selon les revendications 1 à 3, **caractérisé en ce que** l'enveloppe en caoutchouc en forme de barillet appliquée sur le corps moulé rotatif est placée de manière asymétrique par rapport à son équateur de barillet, de telle sorte que la surface de l'élément de transport (14) sur l'un des côtés de l'équateur de barillet passe dans une surface de roulement (14012) latérale du corps moulé rotatif (1401), laquelle fait preuve d'un coefficient de frottement inférieur à celui de l'enveloppe en caoutchouc.

6. Module de transport, selon les revendications 1 à 4, **caractérisé en ce que** le moyen à ressort est un ressort de traction (163) qui lors du montage du module de transport sur une plaque d'appui (190a) d'un poste d'un système de traitement de produits est précontraint et l'arbre d'entraînement (1623) d'une pluralité de modules de transport est placé de manière à pouvoir être monté en étant associable à chaque fois une poulie pour courroie crantée (1628) sur la plaque d'appui (190a), l'arbre d'entraînement (1623) de chacun des éléments de transport (14) étant conçu de manière à pouvoir être relié par complémentarité de forme, mais en étant déplaçable dans la direction axiale avec respectivement l'une des poulies pour courroie crantée (1628), la poulie pour courroie crantée (1628) comportant un orifice central avec un profil de section transversale prédéfinie, le profil étant conçu en fonction des dimensions du diamètre du roulement à billes monté sur l'arbre d'entraînement.

7. Module de transport, selon la revendication 6, **caractérisé en ce que** le poste d'un système de traitement de produit est un poste d'accostage (10).

8. Module de transport, selon la revendication 7, **caractérisé en ce qu'**un moyen de manoeuvre est mécaniquement couplé par l'intermédiaire d'un mécanisme de déplacement destiné à modifier la direction d'orientation de certains des éléments de transport (14) avec une crémaillère (129) d'un mécanisme d'alignement de position, le mécanisme de déplacement étant placé dans une région entre la paroi d'orientation et la face avant du poste d'accostage (10) et en dessous du pont d'accostage (12).

9. Module de transport, selon la revendication 8, **caractérisé en ce que** le moyen de manoeuvre est une roue de réglage.

10. Module de transport, selon la revendication 1, **caractérisé en ce que**, les produits plats sont des colis postaux.

Fig.1

Fig.2

Fig.3

Fig.4

Fig.5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011107379 U1
- WO 2014066838 A1
- US 4973037 A